# EUROPEAN PATENT APPLICATION

(11) **EP 4 583 243 A1**
(43) Date of publication of application: **09.07.2025**
(21) Application number: 24223280.9
(22) Date of filing: 25.12.2024
(51) Int. Cl.: H01M 10/48, H01M 50/505, H01M 50/514, H01M 50/298

(54) **CCS COMPONENT, BATTERY WITH SAME, AND ELECTRIC APPARATUS**

(30) Priority: 02.01.2024 CN 202420003277 U
(71) Applicant: Contemporary Amperex Technology Co., Limited, Ningde, Fujian 352100 (CN)
(72) Inventor: LI, Jie, Ningde, Fujian 352100 (CN); TIAN, Jiayu, Ningde, Fujian 352100 (CN); WANG, Jiafu, Ningde, Fujian 352100 (CN); WEI, Xing, Ningde, Fujian 352100 (CN); WU, Zebin, Ningde, Fujian 352100 (CN)
(74) Representative: Gong, Jinping

(57) **Abstract**

This utility model discloses a CCS component, a battery with the same, and an electric apparatus. The CCS component includes: an isolation plate, where the isolation plate is a vacuum formed plastic piece, and a side surface of the isolation plate in thickness direction is a first surface; and connecting pieces, where the connecting pieces are connected to the isolation plate and arranged on a side on which the first surface of the isolation plate is located, and the connecting piece is configured to electrically connect an electrode pole of a battery cell. According to the CCS component of this utility model, the isolation plate and the connecting pieces are provided, and the isolation plate is provided as a vacuum formed plastic piece, which can give a high production efficiency of the isolation plates and save costs, thereby greatly improving the production efficiency of the CCS components and reducing the production costs of the CCS components.

## Description

### TECHNICAL FIELD

This utility model relates to the field of battery technologies, and in particular, to a CCS component, a battery with the same, and an electric apparatus.

### BACKGROUND

In batteries, in order to facilitate electrical connection of a plurality of battery cells and signal acquisition of the battery cells, there is usually a CCS (Cells Contact System, integrated busbar) component provided, and the CCS component is provided with an isolation plate for fixing electrically connecting pieces and a signal acquisition wire harness, and the isolation plate can also separate the electrically connecting pieces from the battery cells in order to reduce the risk of short circuit in the battery.

In traditional production processes, due to process limitations, isolation plates are usually processed and manufactured by injection molding to meet the needs of use and production. But with the further development of science and technology, various processing techniques have become more mature and diverse. When isolation plates are processed and manufactured by injection molding, for the isolation plate, a mold development cycle is long, the production efficiency is low, and the cost is high, resulting in a low yield rate during production.

### SUMMARY

This utility model is intended to resolve at least one of the technical problems in the prior art. Thus, an objective of this utility model is to propose a CCS component. The CCS component can significantly shorten the mold development cycle of the isolation plate, which gives a higher production efficiency and yield rate of the CCS components, effectively reducing the production costs of the CCS components.

This utility model further proposes a battery with the foregoing CCS component.

This utility model further proposes an electric apparatus with the foregoing battery.

The CCS component according to a first aspect of this utility model includes: an isolation plate, where the isolation plate is a vacuum formed plastic piece, and a side surface of the isolation plate in thickness direction is a first surface; and connecting pieces, where the connecting pieces are connected to the isolation plate and arranged on a side on which the first surface of the isolation plate is located, and the connecting piece is configured to electrically connect an electrode pole of a battery cell.

In the CCS component according to this utility model, the isolation plate and the connecting pieces are provided, and the isolation plate is provided as a vacuum formed plastic piece, which can give a high production efficiency of the isolation plates and save costs, thereby greatly improving the production efficiency of the CCS components and effectively reducing the production costs of the CCS components.

In some embodiments of this utility model, the CCS component further includes wire harnesses, where the wire harness extends on the first surface, the wire harness has an acquisition end, and the acquisition end is connected to the connecting piece.

In the embodiments, the wire harness provided with a simple structure can meet the need for acquiring information from battery cells in a battery. The arrangement of the wire harness and the connecting piece on the same side of the isolation plate can facilitate the connection and arrangement of the wire harness and the connecting piece on the isolation plate. Moreover, the isolation plate can effectively separate the wire harness from the battery cells, making it convenient and reliable to connect the CCS component to the battery cells during assembly in the battery.

In one embodiment of this utility model, the CCS component further includes a binding piece, where the wire harness is bound to the isolation plate by the binding piece.

In this embodiment, the binding piece is provided to fix the wire harness on the isolation plate, with a simple structure and reliable and stable fixation.

In some examples of this utility model, the isolation plate is provided with hole groups, where the hole group includes two spaced perforations, one end of the binding piece passes through the two perforations of the hole group and is connected to another end of the binding piece to bind the wire harness between the two perforations.

In the embodiments, the hole groups are provided in the isolation plate, which can facilitate binding and fixing of the wire harness on the isolation plate by the binding piece. The hole group has a simple structure and is easy to process, making it easy and convenient to fix the wire harness to the isolation plate.

In an example of this utility model, a plurality of hole groups are provided, where the plurality of hole groups are spaced apart in length direction of the wire harnesses, and the binding pieces are in one-to-one correspondence with the hole groups.

In the embodiments, a plurality of hole groups are provided, and the binding pieces are in one-to-one correspondence with the hole groups, so that the wire harnesses can be stably and reliably bound and fixed to the isolation plate in their length direction by a plurality of binding pieces, with a simple structure and convenient and reliable fixation.

In one embodiment of this utility model, the first surface is provided with an adhesive zone, and the wire harnesses are adhesively connected to the adhesive zone.

In this embodiment, the adhesive zone is provided on the first surface, which can make the wire harnesses to be fixed to the isolation plate more reliably and stably.

In one embodiment of this utility model, a limiting flange is formed on a side edge of the connecting piece facing the wire harness, a limiting hole is formed on the limiting flange, and the acquisition end passes through the limiting hole and is connected to the connecting piece.

In this embodiment, the limiting flange is provided on the connecting piece, and the limiting hole is provided on the limiting flange, which can facilitate the assembly and positioning of the wire harness and the connecting piece. After the acquisition end of the wire harness is connected to the connecting piece, the portion of the wire harness close to the acquisition end can be well limited and fixed, thereby making the wire harness to be assembled with and fixed to the isolation plate and the connecting piece more reliably and stably.

In some embodiments of this utility model, the isolation plate is formed with a bypass hole penetrating through the isolation plate in the thickness direction, where the bypass hole is configured to bypass the electrode pole of the battery cell, and the connecting piece covers a position at which the bypass hole is located for electrical connection with the electrode pole at the position at which bypass hole is located.

In the embodiments, the bypass hole is provided in the isolation plate, which can facilitate the connection and fixation of the connecting pieces and the battery cells. The connecting piece covers the bypass hole, which can make the connecting piece be reliably and stably fixed to the isolation plate.

In one embodiment of this utility model, the first surface is formed with grooves, where the bypass hole penetrates through a bottom wall of the groove, the connecting piece is disposed in the groove, and in the thickness direction of the isolation plate, a thickness of the connecting piece is greater than a depth of the groove.

In this embodiment, the grooves are formed on the first surface of the isolation plate, which can facilitate the assembly and positioning of the connecting pieces with the isolation plate, making the connecting pieces to be connected and fixed to the isolation plate more stably and conveniently. Moreover, the connecting pieces are disposed in the grooves, which can enhance the structural strength of the isolation plate to some extent, thereby improving the overall structural stability of the CCS component. In this embodiment, a side surface of the connecting piece protrudes from the first surface of the isolation plate, which can facilitate the fitting and fixing of the connecting piece with the groove, making the assembly of the connecting piece with the isolation plate convenient.

In some embodiments of this utility model, the first surface is provided with protruding connecting poles, the connecting piece is provided with a connecting hole penetrating through the connecting piece in the thickness direction of the connecting piece, and the connecting pole is fitted in the connecting hole.

In this embodiment, the connecting poles are provided to fit with the connecting holes to connect and fix the isolation plate and the connecting pieces, with a simple structure and convenient fixation.

In one embodiment of this utility model, the isolation plate is riveted to the connecting pieces through the connecting poles.

In this embodiment, the isolation plate is riveted to the connecting pieces, with a simple structure and convenient fixation.

In some examples of this utility model, a plurality of connecting holes are provided, where the plurality of connecting holes are spaced apart, and the connecting poles are in one-to-one correspondence with the connecting holes.

In this embodiment, a plurality of connecting poles are provided and the plurality of connecting holes are spaced apart on the connecting pieces, which can make the connecting pieces to be fixed to the isolation plate more reliably and stably.

A battery according to a second aspect of this utility model includes a plurality of battery cells and the CCS component according to any one of claims 1 to 12, where a side surface of the isolation plate facing away from the battery cells is formed as the first surface, and the connecting piece is electrically connected to an electrode pole of an adjacent battery cell.

In the battery according to this utility model, the CCS component according to the first aspect is provided, the isolation plate and the connecting pieces are provided, and the isolation plate is provided as a vacuum formed plastic piece, which can give a high production efficiency of the isolation plates and save costs, thereby greatly improving the production efficiency of the CCS components and effectively reducing the production costs of the CCS components.

According to a third aspect of this utility model, an electric apparatus includes the battery according to the second aspect of this utility model.

In the electric apparatus according to this utility model, the battery according to the second aspect is provided, the isolation plate and the connecting pieces are provided, and the isolation plate is provided as a vacuum formed plastic piece, which can give a high production efficiency of the isolation plates and save costs, thereby greatly improving the production efficiency of the CCS components and effectively reducing the production costs of the CCS components.

Additional aspects and advantages of this utility model will be partially given in the following description, and some of which will become apparent in the following description or may be learned from the practice of this utility model.

### BRIEF DESCRIPTION OF DRAWINGS

FIG. 1 is a schematic diagram of an electric apparatus according to an embodiment of this utility model;
FIG. 2 is a schematic diagram of a battery according to an embodiment of this utility model;
FIG. 3 is a schematic diagram of a CCS component according to an embodiment of this utility model;
FIG. 4 is a schematic diagram of a CCS component from another perspective according to an embodiment of this utility model;
FIG. 5 is a partially enlarged schematic diagram of position A shown in FIG. 4;
FIG. 6 is a schematic diagram of a CCS component from a further perspective according to an embodiment of this utility model;
FIG. 7 is a cross-sectional view taken along line B-B shown in FIG. 6; and
FIG. 8 is a partially enlarged schematic diagram of position C shown in FIG. 7.

### Reference signs:

10. CCS component;
11. isolation plate; 111. connecting pole; 112. perforation; 113. bypass hole;
12. connecting piece; 121. limiting flange; 1211. limiting hole; 122. observation hole;
13. wire harness; 131. acquisition end; 14. binding piece;
100. battery; 200. controller; 300. motor; and
1000. electric apparatus.

### DESCRIPTION OF EMBODIMENTS

The following describes in detail embodiments of technical solutions of this utility model with reference to the accompanying drawings. The following embodiments are merely intended for a clearer description of the technical solutions of this utility model and therefore are used as just examples that do not constitute any limitations on the protection scope of this utility model.

Unless otherwise defined, all technical and scientific terms used herein shall have the same meanings as commonly understood by those skilled in the art to which this utility model relates. The terms used herein are intended to merely describe the specific embodiments rather than to limit this utility model. The terms "include", "comprise", "have", and any other variations thereof in the specification, claims and brief description of drawings of this utility model are intended to cover non-exclusive inclusions.

In the description of the embodiments of this utility model, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of this utility model, "a plurality of" means at least two unless otherwise specifically stated.

In this specification, reference to "embodiment" means that specific features, structures or characteristics described with reference to the embodiment may be incorporated in at least one embodiment of this utility model. The term appearing in various places in this specification does not necessarily refer to the same embodiment or an independent or alternative embodiment that is exclusive of other embodiments. Persons skilled in the art explicitly and implicitly understand that the embodiments described herein may combine with another embodiment.

In the descriptions of the embodiments of this utility model, the term "a plurality of" means more than two (inclusive). Similarly, "a plurality of groups" means more than two (inclusive) groups, and "a plurality of pieces" means more than two (inclusive) pieces.

In the description of the embodiments of this utility model, the orientations or positional relationships indicated by the technical terms "length", "width", "thickness", "upper", "lower", "front", "rear", "bottom", "inside", "outside", and the like are based on the orientations or positional relationships as shown in the accompanying drawings. These terms are merely for ease and brevity of description of the embodiments of this utility model rather than indicating or implying that the means or components mentioned must have specific orientations or must be constructed or manipulated according to specific orientations, and therefore shall not be construed as any limitation on the embodiments of this utility model.

In the description of the embodiments of this utility model, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skills in the art can understand specific meanings of these terms in the embodiments of this utility model as appropriate to specific situations.

Currently, from the perspective of market development, application of power batteries is being more extensive. Power batteries have been not only used in energy storage power supply systems such as hydroelectric power plants, heat power plants, wind power plants, and solar power plants, but also widely used in many other fields including electric transportation tools such as electric bicycles, electric motorcycles, and electric vehicles, military equipment, and aerospace. With the continuous expansion of application fields of power batteries, market demands for the power batteries are also expanding.

A CCS component is usually provided in a battery for electrically connecting a plurality of battery cells and acquiring information. The CCS component includes an isolation plate for mounting and fixing electrical connecting pieces and information acquisition wire harnesses. During production and processing, the isolation plate is often produced and manufactured by injection molding, resulting in a long mold development cycle, long production time, low yield rate, and high costs.

Based on the foregoing considerations, to solve the problem of how to improve the production efficiency of CCS components and reduce production costs, this utility model provides a CCS component. With the isolation plate in the CCS component being provided as a vacuum formed plastic piece, the mold development cycle is greatly reduced, and the production yield rate is improved, thus significantly improving the production efficiency of the CCS component and greatly reducing the costs of the CCS component.

A battery disclosed in an embodiment of this utility model can be used in an electric apparatus that uses a battery as a power source or in various energy storage systems that use batteries as energy storage elements. The electric apparatus may be but is not limited to a mobile phone, a tablet computer, a laptop computer, an electric toy, an electric tool, an electric bicycle, an electric vehicle, a ship, and a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this utility model being an electric apparatus 1000 is used as an example for description of the following embodiments.

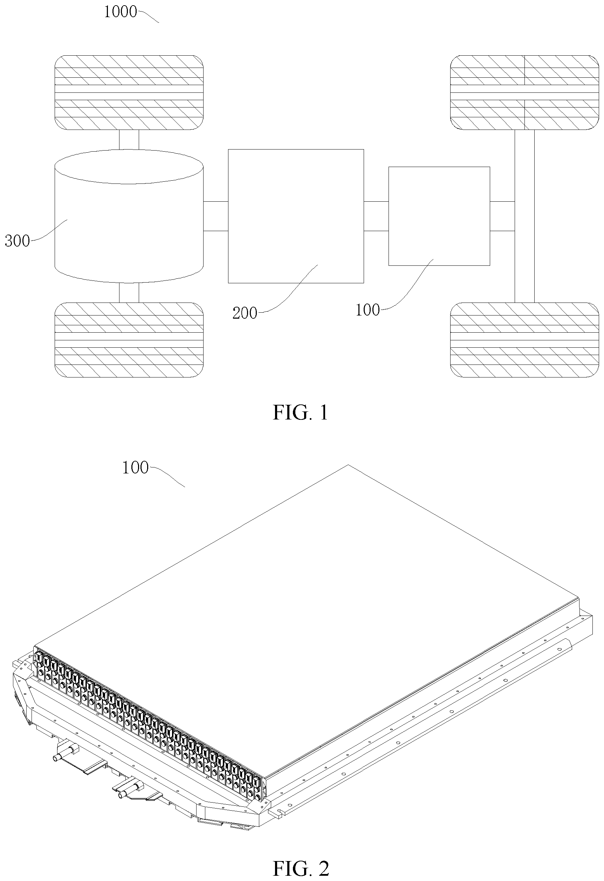

Referring to FIG. 1, FIG. 1 is a schematic diagram of an electric apparatus 1000 according to an embodiment of this utility model. The vehicle may be a fossil fuel vehicle, a natural-gas vehicle, or a new energy vehicle. The new energy vehicle may be a battery electric vehicle, a hybrid electric vehicle, a range-extended electric vehicle, or the like. The vehicle is provided with a battery 100 inside, where the battery 100 may be disposed at the bottom, front, or rear of the vehicle. The battery 100 may be configured to supply power to the vehicle. For example, the battery 100 may be used as an operational power source for the vehicle. The vehicle may further include a controller 200 and a motor 300, where the controller 200 is configured to control the battery 100 to supply power to the motor 300, for example, to satisfy operating power needs during start, navigation, and traveling of the vehicle.

In some embodiments of this utility model, the battery 100 can be used as not only the operational power supply for the vehicle but also a driving power supply for the vehicle, replacing or partially replacing fossil fuel or natural gas to provide driving power for the vehicle.

Referring to FIG. 2, FIG. 2 is a schematic structural diagram of a battery 100 according to some embodiments of this utility model. In the embodiments of this utility model, the battery 100 may include a plurality of battery cells to meet different power usage demands, where the plurality of battery cells may be connected in series, parallel, or series and parallel to form a whole, and the whole formed by the plurality of battery cells is then accommodated in a box body.

The battery cell may be a secondary battery or a primary battery, and the secondary battery refers to a battery cell that can be recharged to activate active materials for continuous use after the battery cell is discharged. For example, the battery cells may be sodium-ion batteries, lithium-ion batteries, sodium-lithium-ion batteries, lithium-metal batteries, sodium-metal batteries, lithium-sulfur batteries, magnesium-ion batteries, nickel-hydrogen batteries, nickel-cadmium batteries, lead-acid batteries, and so on. This is not limited in the embodiments of this application.

The box body is a hollow structure. The box body can include two portions, referred to herein as the first box body and the second box body. The first box body and the second box body can be snap-fitted together to form the hollow structure. The shape of the box body can be determined according to the shapes of the battery cells and other parts accommodated therein. One of the first box body and the second box body can be formed as a hollow rectangular box body with an opening, and the other can be formed in the form of a plate to cover the opening. Both the first box body and the second box body may alternatively be formed as hollow rectangular structures with an opening.

The other parts in the box body may include a CCS component 10. The CCS component 10 is used for electrically connecting a plurality of battery cells and acquiring information such as voltage and current of the battery cells.

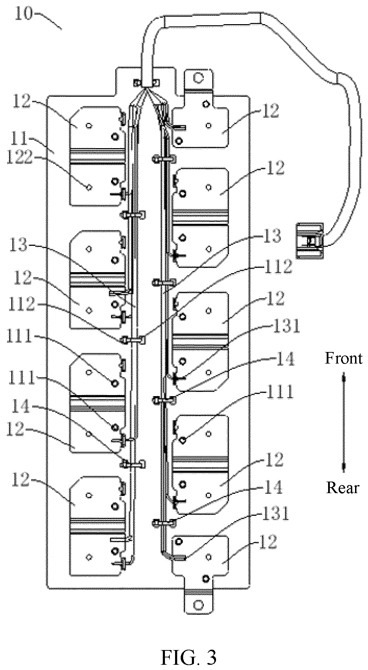

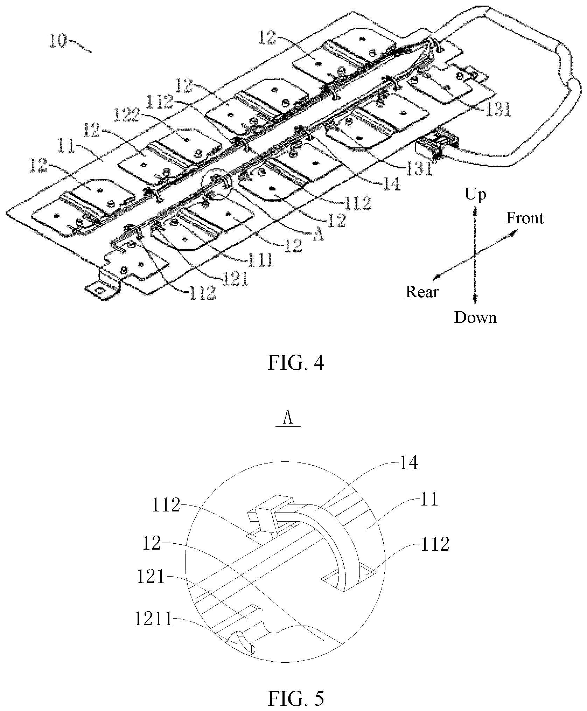

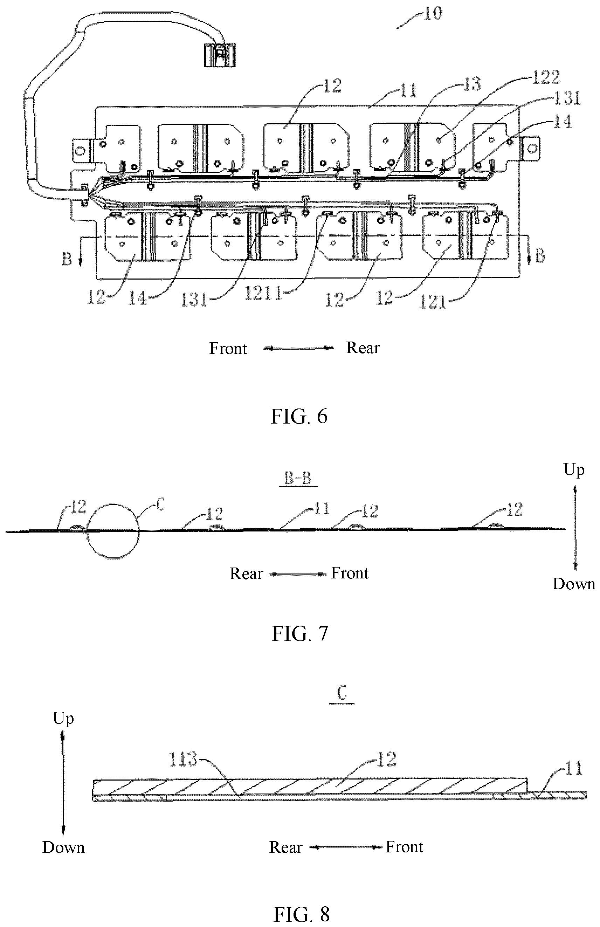

The following describes a CCS component 10 according to embodiments of a first aspect of this utility model with reference to FIG. 3 to FIG. 8. FIG. 3 is a schematic diagram of a CCS component 10 according to an embodiment of this utility model; FIG. 4 is a schematic diagram of a CCS component 10 from another perspective according to an embodiment of this utility model; FIG. 5 is a partially enlarged schematic diagram of position A shown in FIG. 4; FIG. 6 is a schematic diagram of a CCS component 10 from a further perspective according to an embodiment of this utility model; FIG. 7 is a cross-sectional view taken along line B-B shown in FIG. 6; and FIG. 8 is a partially enlarged schematic diagram of position C shown in FIG. 7.

As shown in FIG. 3 to FIG. 8, the CCS component 10 according to the embodiments of the first aspect of this utility model includes an isolation plate 11 and connecting pieces 12. The isolation plate 11 is a vacuum formed plastic piece, and a side surface of the isolation plate 11 in thickness direction (up and down directions as shown in FIG. 4) is a first surface. The connecting pieces 12 are connected to the isolation plate 11 and arranged on a side at which the first surface of the isolation plate 11 is located, and the connecting piece 12 is configured to electrically connect an electrode pole of a battery cell.

The CCS component 10 can also be referred to as a CCS integrated busbar, where CCS stands for Cells Contact System, meaning integrated busbar. The CCS component 10 is mainly composed of a signal acquisition component, a plastic structural part, copper and aluminum busbars, and the like, which are connected into a whole by hot pressing or riveting. The CCS component 10 realizes the high-voltage series and parallel connection of battery cells, as well as the temperature and voltage sampling functions of the battery cells. The signal acquisition component may be a traditional acquisition wire harness or a flexible circuit board. The plastic structural part is configured to electrically connecting a plurality of battery cells. In this embodiment, the plastic structural part is the isolation plate 11.

In this embodiment, the isolation plate 11 is configured as a vacuum formed plastic piece. The vacuum formed plastic piece is a product manufactured using the vacuum forming process. The vacuum forming process is a molding technology that uses thermoplastic sheets as molding objects, where after cutting into a required size, a sheet is heated and softened, then vacuum-adsorbed onto a surface of a mold, and cooled to form a desired product. In this embodiment, the isolation plate 11 may be manufactured by processing polypropylene material and processed and molded by the vacuum forming process.

The connecting pieces 12 are configured to electrically connect the battery cells. The number of connecting pieces 12 can be determined based on the number of battery cells in the battery 100, and the arrangement of the connecting pieces 12 on the isolation plate 11 can also be set accordingly based on the layout of the battery cells. The connecting pieces 12 can be made of aluminum or another metallic material. In this embodiment, the connecting pieces 12 are connected to the isolation plate 11 and arranged on the first surface of the isolation plate 11. The connecting pieces 12 can be connected to the isolation plate 11 by a connection method such as snap-fit connection, hot riveted connection, or bolt fixation. The connecting piece 12 may be a connecting plate, and the connecting piece 12 can form a connecting mating surface with the isolation plate 11.

In this embodiment, the isolation plate 11 being provided as a vacuum formed plastic piece can allow the isolation plate 11 to be produced and processed in a more convenient and easier manner. As compared to the production and processing by using the injection molding process, a shorter mold development cycle, a higher yield rate, and a higher production efficiency can be provided for the isolation plate 11, thereby significantly reducing the production costs of the CCS component 10. In this embodiment, the connecting pieces 12 can well meet the need for electrically connecting the plurality of battery cells.

It can be understood that a battery cell is provided with a housing. The housing is generally made of conductive metallic materials. The electrode pole of the battery cell protrudes from the housing. In this embodiment, the connecting pieces 12 are arranged on the first surface of the isolation plate 11. When the connecting pieces 12 are electrically connected to the electrode poles, the isolation plate 11 can effectively separate the connecting pieces 12 from the housings of the battery cells, thereby reducing the risk of short circuit in the battery 100.

In the CCS component 10 according to this utility model, the isolation plate 11 and the connecting pieces 12 are provided, and the isolation plate 11 is provided as a vacuum formed plastic piece, which can give a high production efficiency of the isolation plates 11 and save costs, thereby greatly improving the production efficiency of the CCS components 10 and effectively reducing the production costs of the CCS components 10.

In some embodiments of this utility model, as shown in FIG. 3, the CCS component 10 may further include wire harnesses 13, where the wire harness 13 extends on the first surface, the wire harness 13 has an acquisition end 131, and the acquisition end 131 is connected to a connecting piece 12.

The wire harness 13 may be provided in plurality, and each wire harness 13 may have a different acquisition function. For example, the wire harnesses 13 may include low-voltage sampling wire harnesses, high-voltage sampling wire harnesses, temperature sampling wire harnesses, and the like. The wire harnesses 13 extend on the first surface, meaning that the wire harnesses 13 are located on a same side surface of the isolation plate 11 in the thickness direction as the connecting pieces 12. When routed on the isolation plate 11, the wire harnesses 13 can be routed according to the arrangement of the connecting pieces 12 to bypass the connecting pieces 12. For example, as shown in FIG. 3, the connecting pieces 12 are arranged in two rows, and the wire harnesses 13 can be routed in a zone between the two rows of connecting pieces 12 on the isolation plate 11 and connected to the connecting pieces 12.

The wire harness 13 can be constrained and fixed on the first surface of the isolation plate 11 by a method such as snap-fitting, bonding, or tying. The acquisition end 131 of the wire harness 13 can be electrically connected to the connecting piece 12 by welding.

In the embodiments, the wire harness 13 provided with a simple structure can meet the need for acquiring information from battery cells in a battery 100. The arrangement of the wire harness 13 and the connecting piece 12 on the same side of the isolation plate 11 can facilitate the connection and arrangement of the wire harness 13 and the connecting piece 12 on the isolation plate 11. Moreover, the isolation plate 11 can effectively separate the wire harness 13 from the battery cells, making it convenient and reliable to connect the CCS component 10 to the battery cells during assembly in the battery 100.

In one embodiment of this utility model, as shown in FIG. 3, the CCS component 10 may further include a binding piece 14, where the wire harness 13 is bound to the isolation plate 11 by the binding piece 14.

After the wire harness 13 is arranged on the isolation plate 11, the binding pieces 14 can bind the wire harness 13 on the isolation plate 11. The number of binding pieces 14 can be set according to the fixation needs of the wiring direction of the wire harness 13. The binding piece 14 may be a cable tie. The material of the binding piece 14 may be nylon, stainless steel, plastic-coated stainless steel, or the like. The cable tie can be a releasable cable tie, a pin-type cable tie, or the like.

In this embodiment, the binding piece 14 is provided to fix the wire harness 13 on the isolation plate 11, with a simple structure and reliable and stable fixation.

In some examples of this utility model, as shown in FIG. 3 to FIG. 8, the isolation plate 11 is provided with hole groups, where the hole group includes two spaced perforations 112, one end of the binding piece 14 passes through the two perforations 112 of the hole group and is connected to another end of the binding piece 14 to bind the wire harness 13 between the two perforations 112.

The perforations 112 may be circular holes, rectangular holes, waist-shaped holes, or the like. The shape and size of the perforations 112 can be set according to a cross-sectional shape or the maximum cross-section of the binding piece 14. The spacing between two perforations 112 can be set according to a total cross-sectional size of the wire harness 13 to be bound. For example, when there are more wire harnesses 13 between the two perforations 112, the spacing between the two perforations 112 can be set larger. When there are fewer wire harnesses 13 between the two perforations 112, the spacing between the two perforations 112 can be set smaller. Of course, the spacing between the two perforations 112 can alternatively be set to a fixed value to simplify the design of the perforations 112. After the binding piece 14 binds and fixes the wire harness 13, a side of the wire harness 13 facing the isolation plate 11 can be pressed against the first surface of the isolation plate 11.

In the embodiments, the hole groups are provided in the isolation plate 11, which can facilitate binding and fixing of the wire harness 13 on the isolation plate 11 by the binding piece 14. The hole group has a simple structure and is easy to process, making it easy and convenient to fix the wire harness 13 to the isolation plate 11.

In an example of this utility model, referring to FIG. 4, a plurality of hole groups are provided, where the plurality of hole groups are spaced apart in length direction of the wire harnesses 13 (front and rear direction as shown in FIG. 4), and the binding pieces 14 are in one-to-one correspondence with the hole groups.

For example, two, three, four, five, six, or more hole groups can be provided. The plurality of hole groups are arranged at a specific interval in the length direction of the wire harnesses 13. The binding piece 14 pass through the perforations 112 of each hole group to fix the wire harness 13 on the isolation plate 11. The spacing between the hole groups can be set according to the fixation needs of the wire harness 13. For example, the spacing between the hole groups can be set in such a way that no arching of the wire harness 13 occurs after the wire harness 13 is bound and fixed.

In the embodiments, a plurality of hole groups are provided, and the binding pieces 14 are in one-to-one correspondence with the hole groups, so that the wire harnesses 13 can be stably and reliably bound and fixed to the isolation plate 11 in their length direction by a plurality of binding pieces 14, with a simple structure and convenient and reliable fixation.

In one embodiment of this utility model, referring to FIG. 4 and FIG. 5, the first surface is provided with an adhesive zone, and the wire harnesses 13 are adhesively connected to the adhesive zone.

The adhesive zone on the first surface may be provided with structural adhesive, double-sided tape, or the like. A portion of the wire harness 13 can be abutted against the adhesive zone on the first surface, or the binding pieces 14 may be partially abutted against the adhesive zone. The adhesive zone may be formed between two perforations 112 of a same hole group or between two adjacent hole groups.

In this embodiment, the adhesive zone is provided on the first surface, which can make the wire harnesses 13 to be fixed to the isolation plate 11 more reliably and stably.

In one embodiment of this utility model, as shown in FIG. 4 and FIG. 5, a limiting flange 121 is formed on a side edge of the connecting piece 12 facing the wire harness 13, a limiting hole 1211 is formed on the limiting flange 121, and the acquisition end 131 passes through the limiting hole 1211 and is connected to the connecting piece 12.

A plurality of limiting flanges 121 can be formed on the connecting piece 12. The plurality of limiting flanges 121 are spaced apart in an extending direction of the wire harness 13. The limiting flanges 121 can extend in thickness direction of the connecting piece 12, facing away from the isolation plate 11. A side edge of the connecting piece 12 can partially form the limiting flanges 121. The limiting holes 1211 may be formed on the connecting piece 12 and the limiting flange 121. The limiting hole 1211 may penetrate through the limiting flange 121 in the thickness direction of the limiting flange 121. A size of the limiting hole 1211 can be set according to a size of the acquisition end 131.

In this embodiment, the limiting flange 121 is provided on the connecting piece 12, and the limiting hole 1211 is provided on the limiting flange 121, which can facilitate the assembly and positioning of the wire harness 13 and the connecting piece 12. After the acquisition end 131 of the wire harness 13 is connected to the connecting piece 12, the portion of the wire harness 13 close to the acquisition end 131 can be well limited and fixed, thereby making the wire harness 13 to be assembled with and fixed to the isolation plate 11 and the connecting piece 12 more reliably and stably.

In some embodiments of this utility model, as shown in FIG. 4, the first surface is provided with protruding connecting poles 111, the connecting piece 12 is provided with a connecting hole penetrating through the connecting piece 12 in the thickness direction of the connecting piece 12, and the connecting pole 111 is fitted in the connecting hole.

The connecting poles 111 may be cylindrical poles, prismatic poles, stepped poles, special-shaped poles, or the like. The connecting poles 111 may be made of a material the same as or different from the isolation plate 11. The connecting poles 111 may be integrally formed with the isolation plate 11. A height and size of the connecting poles 111 can be set according to the assembly and fixation needs of the isolation plate 11 and the connecting pieces 12. For example, when the connecting poles 111 are cylindrical poles, the height of the connecting poles 111 can be set between 4 mm and 5 mm, so that the connecting holes of the connecting poles 111 can fit well with the connecting holes of the isolation plate 11. The diameter of the cylindrical poles can also be set between 4 mm and 5 mm to ensure good structural strength after the connecting poles 111 are fixed to the isolation plate 11. When the isolation plate 11 and the connecting pieces 12 are fixed, the isolation plate 11 can extend through the connecting holes by the connecting poles 111 and be fixed to the connecting pieces 12 by snap-fit connection, riveted connection, adhesive connection, or welding connection.

In this embodiment, the connecting poles 111 are provided to fit with the connecting holes to connect and fix the isolation plate 11 and the connecting pieces 12, with a simple structure and convenient fixation.

In one embodiment of this utility model, referring to FIG. 4, the isolation plate 11 can be riveted to the connecting pieces 12 through the connecting poles 111.

The isolation plate 11 is riveted to the connecting pieces 12 through the connecting poles 111. Specifically, after the connecting piece 12 is assembled with the isolation plate 11, the connecting pole 111 penetrates into the connecting hole from one side of the connecting hole and extends out from the other side of the connecting hole. The connecting poles 111 may be riveted and fixed to the connecting piece 12 by hot melting, thereby fixing the connecting pieces 12 to the isolation plate 11.

In this embodiment, the isolation plate 11 is riveted to the connecting pieces 12, with a simple structure and convenient fixation.

In some examples of this utility model, as shown in FIG. 4, a plurality of connecting holes are provided, where the plurality of connecting holes are spaced apart, and the connecting poles 111 are in one-to-one correspondence with the connecting holes.

For example, two, three, four, five, or more connecting holes can be provided, and correspondingly, two, three, four, five, or more connecting poles 111 are provided. The connecting holes are spaced apart on the connecting piece 12. Specifically, the connecting holes can be arranged at intervals in the same direction on the connecting piece 12. The connecting holes may alternatively be staggered in the same direction. For example, referring to FIG. 4, the connecting holes can be arranged on a side of the connecting piece 12 close to the wire harnesses 13. The connecting holes are spaced apart in the arrangement direction of the plurality of connecting pieces 12.

In this embodiment, a plurality of connecting poles are provided and the plurality of connecting holes are spaced apart on the connecting pieces 12, which can make the connecting pieces 12 to be fixed to the isolation plate 11 more reliably and stably.

In some embodiments of this utility model, as shown in FIG. 7 and FIG. 8, the isolation plate 11 is formed with a bypass hole 113 penetrating through the isolation plate 11 in the thickness direction, where the bypass hole 113 is configured to bypass the electrode pole of the battery cell, and the connecting piece 12 covers a position at which the bypass hole 113 is located for electrical connection with the electrode pole at the position at which the bypass hole 113 is located.

In assembling and connecting the CCS component 10 with the plurality of battery cells in the battery 100, the battery cells are arranged on a side of the isolation plate 11 facing away from the connecting pieces 12 and the wire harnesses 13. The electrode pole of the battery cell extends into the bypass hole 113 and is connected to the side surface of the connecting piece 12 facing the bypass hole 113. The shape and size of the bypass hole 113 can match the shape and size of the electrode pole. In the embodiments, the connecting piece 12 covers the position at which the bypass hole 113 is located. To be specific, in a plane perpendicular to the thickness direction of the isolation plate 11, a projection of the bypass hole 113 falls within a projection range of the connecting piece 12. The periphery of the connecting piece 12 may abut against the first surface of the isolation plate 11.

In the embodiments, the bypass hole 113 is provided in the isolation plate 11, which can facilitate the connection and fixation of the connecting pieces 12 and the battery cells. The connecting piece 12 covers the bypass hole 113, which can make the connecting piece 12 be reliably and stably fixed to the isolation plate 11.

In one embodiment of this utility model, referring to FIG. 7 and FIG. 8, the first surface is formed with grooves, where the bypass hole 113 penetrates through a bottom wall of the groove, the connecting piece 12 is disposed in the groove, and in the thickness direction of the isolation plate 11, a thickness of the connecting piece 12 is greater than a depth of the groove.

The shape of the groove may match the shape of the connecting piece 12. The depth of the groove can be reasonably set according to the fixation needs of the connecting piece 12 and the structural strength needs of the isolation plate 11. In this embodiment, the thickness of the connecting piece 12 is greater than the depth of the groove. After the connecting piece 12 is assembled into the groove, a side of the connecting piece 12 facing away from the groove protrudes from the groove structure, meaning that the side of the connecting piece 12 facing away from the groove protrudes from the first surface.

In this embodiment, the grooves are formed on the first surface of the isolation plate 11, which can facilitate the assembly and positioning of the connecting pieces 12 with the isolation plate 11, making the connecting pieces 12 to be connected and fixed to the isolation plate 11 more stably and conveniently. Moreover, the connecting pieces 12 are disposed in the grooves, which can enhance the structural strength of the isolation plate 11 to some extent, thereby improving the overall structural stability of the CCS component 10. In this embodiment, a side surface of the connecting piece 12 protrudes from the first surface of the isolation plate 11, which can facilitate the fitting and fixing of the connecting piece 12 with the groove, making the assembly of the connecting piece 12 with the isolation plate 11 convenient.

The following describes a battery 100 according to embodiments of a second aspect of this utility model with reference to FIG. 2 to FIG. 8.

As shown in FIG. 2 to FIG. 8, a battery 100 according to the embodiments of the first aspect of this utility model includes a plurality of battery cells and the CCS component 10 according to the embodiments of the first aspect of this utility model, where a side surface of the isolation plate 11 facing away from the battery cells is formed as the first surface, and the connecting piece 12 is electrically connected to an electrode pole of an adjacent battery cell.

The other configurations and operations of the battery 100 according to the embodiments of this utility model are known to those skilled in the art and are not described in detail herein.

In the battery 100 according to the embodiments of this utility model, the CCS component 10 according to the first aspect is provided, the isolation plate 11 and the connecting pieces 12 are provided, and the isolation plate 11 is provided as a vacuum formed plastic piece, which can give a high production efficiency of the isolation plates 11 and save costs, thereby greatly improving the production efficiency of the CCS components 10 and effectively reducing the production costs of the CCS components 10.

The following describes an electric apparatus 1000 according to embodiments of a third aspect of this utility model with reference to FIG. 1 to FIG. 8.

As shown in FIG. 1 to FIG. 8, the electric apparatus 1000 according to the embodiments of this utility model includes the battery 100 according to the second aspect of this utility model.

The other configurations and operations of the battery 100 according to the embodiments of this utility model are known to those skilled in the art and are not described in detail herein.

In the electric apparatus 1000 according to the embodiments of this utility model, the battery 100 according to the second aspect is provided, the isolation plate 11 and the connecting pieces 12 are provided, and the isolation plate 11 is provided as a vacuum formed plastic piece, which can give a high production efficiency of the isolation plates 11 and save costs, thereby greatly improving the production efficiency of the CCS components 10 and effectively reducing the production costs of the CCS components 10.

The following describes an electric apparatus 1000 according to a specific embodiment of this utility model with reference to FIG. 1 to FIG. 8.

As shown in FIG. 1 and FIG. 2, the electric apparatus 1000 is a vehicle. The vehicle includes a motor 300, a controller 200, and a battery 100. The controller 200 is electrically connected to the motor 300 and the battery 100. The battery 100 provides driving power to the motor 300. The battery 100 may include the CCS component 10 and a plurality of battery cells.

As shown in FIG. 3 to FIG. 8, the CCS component 10 includes an isolation plate 11, wire harnesses 13, binding pieces 14, and connecting pieces 12. The isolation plate 11 is made of polypropylene material through vacuum forming. A thickness of the isolation plate 11 is 0.5 mm. The isolation plate 11 is provided with grooves, bypass hole 113, perforations 112, and connecting poles 111. The bottom of the groove is formed with a bypass hole 113. One bypass hole 113 or two spaced apart are provided. The connecting piece 12 is a connecting plate fixed in the groove. The connecting piece 12 covers one or two bypass holes 113. Nine connecting pieces 12 are provided in two rows, with one row having five spaced apart and the other row having four spaced apart. The groove, bypass hole 113, and connecting piece 12 are arranged to match. The perforations 112 are arranged spaced apart in pairs. Two spaced perforations 112 form a hole group. Eight hole groups are provided. One is provided at a position near the edge of the isolation plate 11 to facilitate the fixing of the isolation plate 11 and the bus of the wire harness 13 by the binding piece 14. The other seven hole groups are staggered and spaced apart along the arrangement direction of the connecting pieces 12.

The wire harness 13 is arranged between two perforations 112 of a hole group and fixed on the isolation plate 11 by the binding pieces 14. An adhesive zone is provided at the position of the perforations 112 to enhance the fixation of the wire harness 13. The perforations 112 are rectangular holes, and the binding pieces 14 are cable ties.

The connecting plate is provided with connecting holes and observation holes 122. Two connecting holes are provided. The two connecting holes are spaced apart on the connecting piece 12. The isolation plate 11 is correspondingly provided with connecting poles 111 riveted to the connecting holes. The size of the observation holes 122 may be 2 mm to 4 mm to facilitate observation of the welding between the connecting piece 12 and the electrode pole. There are two types of connecting plates. One is used to connect the electrode poles of two adjacent battery cells, and the other is used to connect the electrode pole of a single battery cell and connect to an external electrical connecting piece 12.

In assembling the CCS component 10, a plurality of connecting pieces 12 are respectively positioned and assembled into corresponding grooves. The isolation plate 11 uses the connecting poles 111 to pass through the connecting holes, riveting and fixing the connecting pieces 12 to the isolation plate 11. The cable tie passes through two perforations 112 of the hole group to bind the wire harness 13 to the isolation plate 11 section by section.

In the electric apparatus 1000 according to the embodiments of this utility model, the battery 100 according to the second aspect is provided, the isolation plate 11 and the connecting pieces 12 are provided, and the isolation plate 11 is provided as a vacuum formed plastic piece, which can give a high production efficiency of the isolation plates 11 and save costs, thereby greatly improving the production efficiency of the CCS components 10 and effectively reducing the production costs of the CCS components 10.

In conclusion, it should be noted that the foregoing embodiments are for description of the technical solutions of this utility model only rather than for limiting this utility model. Although this utility model has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this utility model. All such modifications and equivalent replacements shall fall within the scope of claims and specification of this utility model. In particular, as long as there is no structural conflict, the various technical features mentioned in the embodiments can be combined in any manner. This utility model is not limited to the specific embodiments disclosed in this specification but includes all technical solutions falling within the scope of the claims.

## Claims

1. A CCS component, **characterized by** comprising:
an isolation plate (11), wherein the isolation plate (11) is a vacuum formed plastic piece, and a side surface of the isolation plate (11) in thickness direction is a first surface; and
connecting pieces (12), wherein the connecting pieces (12) are connected to the isolation plate (11) and arranged on a side at which the first surface of the isolation plate (11) is located, and the connecting piece (12) is configured to electrically connect an electrode pole of a battery cell.

2. The CCS component according to claim 1, **characterized by** further comprising wire harnesses (13), wherein the wire harness (13) extends on the first surface, the wire harness (13) has an acquisition end (131), and the acquisition end (131) is connected to the connecting piece (12).

3. The CCS component according to claim 2, **characterized by** further comprising a binding piece (14), wherein the wire harness (13) is bound to the isolation plate (11) by the binding piece (14).

4. The CCS component according to claim 3, **characterized in that** the isolation plate (11) is provided with hole groups, wherein the hole group comprises two spaced perforations (112), one end of the binding piece (14) passes through the two perforations (112) of the hole group and is connected to another end of the binding piece (14) to bind the wire harness (13) between the two perforations (112).

5. The CCS component according to claim 4, **characterized in that** a plurality of hole groups are provided, wherein the plurality of hole groups are spaced apart in length direction of the wire harnesses (13), and the binding pieces (14) are in one-to-one correspondence with the hole groups.

6. The CCS component according to any one of claims 2 to 5, **characterized in that** the first surface is provided with an adhesive zone, and the wire harnesses (13) are adhesively connected to the adhesive zone.

7. The CCS component according to any one of claims 2 to 5, **characterized in that** a limiting flange (121) is formed on a side edge of the connecting piece (12) facing the wire harness (13), a limiting hole (1211) is formed on the limiting flange (121), and the acquisition end (131) passes through the limiting hole (1211) and is connected to the connecting piece (12).

8. The CCS component according to any one of claims 1 to 5, **characterized in that** the isolation plate (11) is formed with a bypass hole (113) penetrating through the isolation plate (11) in the thickness direction, wherein the bypass hole (113) is configured to bypass the electrode pole of the battery cell, and the connecting piece (12) covers a position at which the bypass hole (113) is located for electrical connection with the electrode pole at the position at which the bypass hole (113) is located.

9. The CCS component according to claim 8, **characterized in that** the first surface is formed with grooves, wherein the bypass hole (113) penetrates through a bottom wall of the groove, the connecting piece (12) is disposed in the groove, and in the thickness direction of the isolation plate (11), a thickness of the connecting piece (12) is greater than a depth of the groove.

10. The CCS component according to any one of claims 1 to 5, **characterized in that** the first surface is provided with protruding connecting poles (111), the connecting piece (12) is provided with a connecting hole penetrating through the connecting piece (12) in the thickness direction of the connecting piece (12), and the connecting pole (111) is fitted in the connecting hole.

11. The CCS component according to claim 10, **characterized in that** the isolation plate (11) is riveted to the connecting pieces (12) through the connecting poles (111).

12. The CCS component according to claim 11, **characterized in that** a plurality of connecting holes are provided, wherein the plurality of connecting holes are spaced apart, and the connecting poles (111) are in one-to-one correspondence with the connecting holes.

13. A battery, **characterized by** comprising a plurality of battery cells and the CCS component according to any one of claims 1 to 12, wherein a side surface of the isolation plate (11) facing away from the battery cells is formed as the first surface, and the connecting piece (12) is electrically connected to an electrode pole of an adjacent battery cell.

14. An electric apparatus, **characterized by** comprising the battery according to claim 13.
